# EUROPEAN PATENT APPLICATION

(11) **EP 4 234 489 A1**
(43) Date of publication of application: **30.08.2023**
(21) Application number: 22158616.7
(22) Date of filing: 24.02.2022
(51) Int. Cl.: C01B 32/05, C01B 33/027, H01M 4/04, H01M 4/134, H01M 10/0562, C23C 16/22, C23C 28/04, H01M 4/36, H01M 4/38, H01M 4/583, H01M 4/62

(54) **SECONDARY AND TERTIARY COMPOSITE PARTICLES**

(71) Applicant: Cenate AS, 1814 Askim (NO)
(72) Inventor: KIRKENGEN, Martin, N-1814 Askim (NO); SAUAR, Erik, N-0860 Oslo (NO); FILTVEDT, Werner, N-1814 Askim (NO)
(74) Representative: Onsagers AS

(57) **Abstract**

This invention relates to a method for manufacturing secondary composite particles, secondary composite particles, a method for manufacturing tertiary composite particles, the tertiary composite particles, and a secondary electrochemical cell utilising the secondary or tertiary composite particles as the active material of the negative electrode of the secondary electrochemical cell, wherein each tertiary composite particle comprises a plurality of secondary composite particles embedded in a second matrix being predominantly made of carbon, wherein each secondary composite particle comprises a plurality of primary particles embedded in a first matrix, wherein the primary particles are predominantly composed of silicon and wherein the first matrix comprises silicon and carbon.

## Description

The present invention relates to a method for manufacturing secondary composite particles, secondary composite particles, a method for manufacturing tertiary composite particles, the tertiary composite particles, and a secondary electrochemical cell utilising the secondary or tertiary composite particles as the active material of the negative electrode of the secondary electrochemical cell

### Background

A strong increase in the usage of renewable power and the electrification of many sectors will be necessary in the society presently running on fossil fuel energy in order to meet the goals of The Paris Agreement under the UN Climate Convention. A vital part to obtain these goals is access to rechargeable batteries having excellent specific energies.

Lithium has a comparably very low density of 0.534 g/cm³ and also a high standard reduction potential of -3.045 V for the half-reaction Li⁺ + e⁻ → Li⁰. This makes lithium an attractive candidate for making electrochemical cells with specific energy. However, secondary (rechargeable) electrochemical cells having a negative electrode of metallic lithium have shown to be encumbered with a persistent problem of dendrite formation upon charging which tends to short-circuit the electrochemical cell after a few charge-discharge cycles.

The dendrite problem was solved by applying a negative electrode capable of releasably storing lithium atoms by intercalation. Such batteries are known as secondary lithium-ion batteries (LIBs). The electrochemical properties of LIBs are directly influenced by the physical and chemical properties of the active material(s) of the negative electrode. Both material choice and preparation as well as appropriate architectural modification and design of the active material affects the battery performance [1]. A key problem in this regard was, and still is, to find active materials which may reliably and reversibly store lithium atoms at a high volumetric density when the battery is charged and then release the lithium as ions (Li⁺) when being discharged in a high number of successive charge-discharging cycles.

At present, most of the commercially available LIBs apply graphite as the active material of the negative electrode. Graphite may host/pack one lithium atom per six carbon atoms by intercalation with little shape deformation and has a theoretical specific energy of 372 mAh/g. Commercially available secondary LIBs with graphite anodes typically obtain a specific energy of 100 - 200 Wh/kg, making e.g. a mid-size electric car battery weigh several hundred kilos. This level of specific energy is probably insufficient to realise the goal of the Paris Agreement.

### Prior art

One strategy for improving the specific energy of LIBs is to find materials having higher storage capacity of lithium-ions than graphite for use as the active material of the negative electrode. One interesting and much investigated candidate in this regard is silicon, due to its high capacity for storing lithium atoms by diffusion and alloying. At typical ambient temperatures, the most lithiated phase of silicon is Li_{3.75}Si having a theoretic specific capacity of 3579 mAh/g [1]. Negative electrodes of silicon also have the benefit of enabling providing an attractive working potential reducing the safety concerns related to lithium deposition upon cell over-charge [2].

The lithiation and delithiation of silicon causes huge volume expansions and contractions, respectively in the silicon material. At is most lithiated state of Li_{3.75}Si, the silicon material has a volume of around 320 % higher than the non-lithiated state. The relatively large volume variation associated with lithiation and delithiation cycles is reported to cause cracking and/or dissipation of the silicon electrode and/or repeated formation of a solid electrolyte interface (SEI) layer, which may lead to a range of problems for the performance of the LIB such as loss of electric contact, loss of active material in the electrode, ineffective electron transfer, etc. [1, 2].

Nanostructuring of the silicon material has been investigated as a solution to overcome the volume expansion issue since nanoscale Si-particles may better accommodate the volume variations [2]. It has been demonstrated that use of nanoscale particles in electrodes may provide electrodes with outstanding properties due to the small particle size causing effects such as improved electrical conductivity, improved mechanical and optical properties, etc. [1]. Furthermore, since nanosized particles have a very high surface area to volume ratio, negative electrodes having nanosized active materials may provide excellent charge/- discharge capacity due to high available surface for absorption/desorption of lithium-ions [1].

The interatomic distance between silicon atoms increases as it swells upon accommodating lithium ions (lithiation). For crystalline silicon, the expansion causes large anisotropic stresses to occur within the electrode material, leading to increased fracturing and crumbling of the silicon material. This anisotropic stress has been found to be reduced in many anode configurations if the silicon material itself is amorphous [5].

For LIBs having a liquid electrolyte, there will often be formed a solid electrolyte interface (SEI) during the first lithiation. The formation of the SEI-layer irreversibly consumes lithium and represents an irreversible capacity loss to the electrochemical cell [1]. It is therefore advantageous to form a stable SEI-layer to limit the SEI-induced loss of lithium to the first lithiation/charging of the cell. It has been demonstrated that coating the silicon surface with a suitable element to avoid direct contact between the silicon and the electrolyte may provide a stable SEI-layer [1], but if cracks occur, unprotected surfaces will appear.

Carbon has been investigated and applied both as a coating material and/or as a composite material together with silicon in LIBs having nanostructured silicon as the active material in the negative electrode. Numerous silicon-carbon structures are reported in the literature, ranging from simple mixtures of silicon to complex geometries of silicon with graphene or graphite. These complex structures may exhibit excellent cyclability and capacity but are encumbered with requiring many charge-discharge cycles to reach high coulombic efficiencies and they require multi-step synthesis processes which are complicated to scale-up to commercial production levels [2].

From Sourice et al. (2016) [2] it is known a method for producing nanoscale amorphous silicon particles having a carbon shell/coating by a two-stage laser pyrolysis process where a gaseous flow of silane diluted in an inert gas enters a first reaction zone irradiated by a CO₂-laser to decompose the silane gas into amorphous silicon core particles. To the gas with the formed silicon core particles there is then added ethylene and the mixture is passed to a second reaction zone and irradiated by a CO₂-laser to decompose the ethylene into a carbon shell deposited onto the silicon core particles. The amorphous silicon particles with a carbon coating are found to have excellent specific capacity and high charge/discharge-cycling capability.

US 2012/0107693 discloses an active material for the negative electrode of a LIB including a silicon-containing compound of formula: SiCₓ, where x may be from 0.05 to 1.5, and where the carbon concentration in the material follows the relationship A > B, where A is the mole concentration ratio of carbon relative to silicon at the centre of the active material and B is the mole concentration ratio of carbon relative to silicon on/at the surface area of the active material. The document informs that the carbon may be covalently bonded to the silicon and further that the silicon-containing compound may be particulate and have an amorphous molecular structure. It is further disclosed in paragraph [0030] of US 2012/0107693 that if the carbon content in the active material becomes too low, i.e. if x becomes less than 0.05, the active material may be deteriorated by cracking.

WO 2018/052318 discloses a reactor and method for manufacturing crystalline or amorphous silicon particles by chemical vapour deposition of a silicon-containing precursor onto seed particles inside a heated and rapidly rotating reactor space. The silicon-containing gas may be diluted in a carrier gas and it may be one or a mixture of SiH₄, Si₂H₆, or SiHCl₃. The carrier gas may be one of hydrogen, nitrogen or argon. The formed silicon particles may be given an outer layer of a second material having lower silicon content than the core material of the particles by introducing a second precursor gas, liquid or material comprising C, O or N in combination with silicon, such as SiOₓ, SiCₓ, SiNₓ; amorphous carbon, graphite, low-crystalline carbon or low range order graphene structures.

From EP3428999A1 it is known that a mixture of silane and a hydrocarbon selected from the group of ethen, ethane, propane and acetylene can be fed simultaneously into a plasma enhanced chemical vapour deposition reactor in order to produce a silicon carbon composite powder where the weight ratio of C/Si on the surface of each particle is at least 3 times higher than the weight ratio of C/Si for the average of the total particle, and the particles themselves are less than 300 nm in diameter.

From Sung et al. (2021), it is known a method for producing a carbon-based material for use in a negative electrode active material for a lithium secondary battery, including: a carbon-based core material; a silicon coating layer disposed by CVD on all surfaces of the core material; and a carbon coating layer disposed on the silicon coating layer, wherein the silicon coating layer includes silicon particles and a silicon and carbon based amorphous matrix.

### Objective of the invention

The main objective of the invention is to provide a method for manufacturing tertiary composite particles suitable for use as the active material in negative electrodes in rechargeable lithium-ion electrochemical cells.

A further objective of the invention is to provide a method for manufacturing secondary composite particles suitable for manufacturing tertiary composite particles suitable for use as the active material in negative electrodes in rechargeable lithium-ion electrochemical cells.

A further objective of the invention is to provide secondary composite particles suitable for manufacturing tertiary composite particles suitable for use as the active material in negative electrodes in rechargeable lithium-ion electrochemical cells.

A further objective of the invention is to provide tertiary composite particles suitable for use as the active material in negative electrodes in rechargeable lithium-ion electrochemical cells.

A further objective of the invention is the provision of a negative electrode for a secondary lithium-ion electrochemical cell comprising the tertiary composite particles.

### Description

The present invention is based on the discovery of secondary and tertiary composite particles particularly suitable for use as the active material in negative electrodes in rechargeable lithium-ion electrochemical cells. The resulting electrochemical cells have an improved capacity and cyclability.

In a first aspect, the invention relates to a method for manufacturing a secondary composite particle, wherein the secondary particle comprises a plurality of primary particles embedded in a first matrix, wherein the primary particles are predominantly composed of silicon, and wherein the first matrix comprises silicon and carbon,
characterised in that the method comprises the steps of:
- forming a homogeneous gas mixture comprising a first precursor gas of a silicon containing compound and a second precursor gas of a carbon containing compound, such that the atomic ratio between silicon and carbon in the homogeneous gas mixture is in the range of (0, 10],
- injecting the homogeneous gas mixture having a temperature below a reaction temperature into a reactor space, and then
- raising the temperature of the homogeneous gas mixture to the deposition temperature, wherein the reaction temperature is between 500 and 1200 °C, and
- cooling to a temperature below 500 °C and collecting the secondary composite particles.

The term "predominantly composed of silicon" as used herein, encompasses phases comprising at least 50 % silicon by weight. In one embodiment, the primary particles may comprise at least 80 %, at least 90 %, at least 95 %, at least 96 %, at least 97 %, at least 98 %, at least 99 %, at least 99,5 %, or consisting of 100% silicon.

The notation for intervals as used herein follows the international standard ISO 80000-2, where the brackets "[" and "]" indicate a closed interval border, and the parenthesises "(" and ")"indicate an open interval border. For example, [*a, b*] is the closed interval containing every real number from a included to b included: [*a, b*] = {*x* ∈ 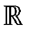 | *a* ≤ *x* ≤ *b*}*,* while (a, b] is the left half-open interval from a excluded to b included: (*a,b*] = {*x* ∈ 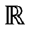 | *a* < *x* ≤ *b*}*.*

In an embodiment of the method the atomic ratio between silicon and carbon in the homogeneous gas mixture may be in the range of [0.1, 8], [0.2, 6] or [0.3, 4].

In an embodiment of the method the cooling may be to a temperature below 450 °C, preferably below 400 °C, below 350 °C, or below 300 °C.

In an embodiment, the homogeneous gas mixture may be preheated to a temperature below 500 ° C before injecting the homogeneous gas mixture into the reactor space. In an embodiment, the homogeneous gas mixture may be preheated to a temperature below 450 °C, preferably below 400 °C, below 350 °C, or below 300 °C before injecting the homogeneous gas mixture into the reactor space.

The homogeneous gas mixture may in example embodiments further comprise additional inert gases, i.e. that will not chemically react with the precursor gases at the reaction temperature, such as e.g. hydrogen, nitrogen, a noble gas like argon, neon, helium, and other gases which may be applied to affect heating, cooling, particle formation kinetics or mass transport, but will not leave chemical impurities in the final particle product. The heating of the precursor gases in the reaction chamber may be achieved by convection, conduction, radiation, laser, mixing with warmer gases or any other known method.

Without being bound by theory, it is possible to argue that the further process is likely to be well described by the following. When the silane molecules reach their reaction temperature, they will start expelling hydrogen atoms and forming higher order silanes, and as more and more hydrogen leaves the silane molecules, eventually form a phase predominantly composed of silicon, hereinafter called primary particles.

As the temperature rises further, the second precursor gas containing the C-atoms will also start to react with the silanes and with the primary particles that have already been formed, forming the first matrices comprising silicon and carbon. As the reaction progresses, the ratio of the first precursor gas of a silicon containing compound to the second precursor gas of a carbon containing compound will be reduced, until there is no more first precursor gas available.

The secondary particles will therefore develop an outer region which will have a high fraction of barrier atoms (i.e. carbon) and a core of a plurality of primary particles predominantly composed of silicon. These initial primary particles are likely to still have a large fraction of hydrogen in them, and thus be somewhat soft at the reaction temperature. Such small particles will have very high diffusion speed (Brownian motion), and they will constantly collide, agglomerating into larger particles. Further growth will occur from the gas phase onto these particles, and within a temperature dependent time frame, the particles will coalesce into a more or less spherical shape, for example a sphere, an ovoid, oblong particles...

In an embodiment of the invention the primary particles may have an average diameter below 10 nm, below 7 nm, below 5 nm, below 3 nm, or below 2 nm. In another embodiment the primary particles may have an average diameter between 0.5 and 10 nm, 0.5 and 5 nm, between 1 and 4 nm, between 1 and 3 nm or between 1 and 2 nm.

The average diameter of the primary particles may be evaluated by Rietveld refinement XRD (X-ray diffraction), after heat treatment of the secondary particles, for example for 30 min at 900 °C.

At some point, the hydrogen content in the silicon primary particles is reduced to a level where the viscosity increases so much that the coalescing stops. There can still be some partial coalescing, but the spheres can still be recognized. Within the secondary composite particles, the silicon nanodomains are still left as a signature of the original process.

The agglomerate size is primarily determined by concentration and reaction time, and by keeping the reaction at a high temperature, the reaction time can be very low.

Finally, the process is terminated when the temperature is reduced to a level where no further reactions or coalescing can occur, that is to say under 500 °C.

Optionally, the termination can be aided by a centrifuge separating large particles from smaller particles, thus selectively stopping the largest particles.

It should be noted that plasma reactions or sputtering processes are probably not suited for this step, as they will not have the same selectivity in reaction rates as the thermally activated process. They are more likely to give a homogeneous distribution of the diffusion limiting elements, thereby giving less benefit from each impurity atom.

The same nanodomains can also be observed growing as layers on a surface of for example graphite, as mentioned in the prior art. In the present invention, the particles are instead formed while floating freely in a gas, allowing much higher reaction speeds, without being limited by the diffusion rate of gas into a powder heap, or by limits in available surface area. The current invention therefore allows much higher productivity and/or shorter reaction times. The current invention also completely provides for a production process that avoids the use of graphite, which has a factor 10 lower Li ion storage capacity than silicon.

The first matrices of the secondary composite particles, in which the primary particles are embedded, serve as silicon diffusion barriers. These first matrices may be rich in carbon. In some embodiments, these first matrices may comprise at least 50% carbon. In others embodiment the first matrices may comprise at least 80 %, at least 90 %, at least 95 %, at least 96 %, at least 97 %, at least 98 %, at least 99 %, at least 99,5 %, or consisting of 100% carbon.

In an embodiment the first matrices may comprise from 50 % to 99,5 %, from 50 % to 99 %, from 50 % to 95 %, or from 50 % to 90 % carbon.

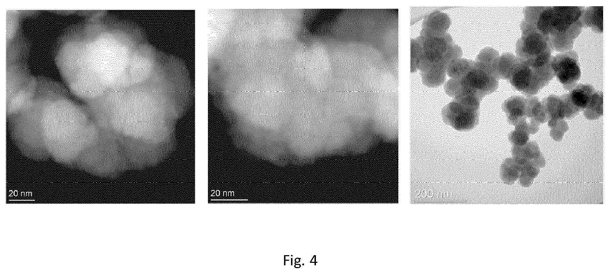

When in use in LIB batteries, lithium enters or leaves the secondary composite particles, a certain amount of silicon co-diffusion can be expected. This is not universally recognized, but many degradation phenomena are difficult to explain without some assumption of a silicon co-diffusion. (See for example [7], especially fig 4, [8] and [9]). C-C bonds are in general more than 50% stronger than the Si-Si bonds. C-C double bonds are 200% stronger. The carbon rich first matrices will hence act as a strong silicon diffusion barrier. The silicon diffusion barrier has less cycling capacity than silicon, and its amount should therefore be limited. It should form a strong covalent bond with silicon and be easy to introduce in a gaseous form.

The diffusion barrier should preferably not irreversibly trap lithium, meaning that carbon is advantageous over oxygen and nitrogen. Furthermore, the second precursor gas must be reactive at a slightly higher temperature than the first precursor gas. This again favors many of the hydrocarbons over nitrogen and oxygen containing gases.

The secondary composite particles may be individual spheres, or they may have reached a more non-symmetrical shape through coalescence or partial coalescence. In any given reaction, a distribution of sizes is expected, and can be described i.e. with a D10, D50 and D90 estimated from a DLS measurement. The size distribution of the secondary composite particles may be quantified by their DLS equivalent mass, a measure of how much mass is in the agglomerate and the solvent it drags along during the DLS measurement. In an embodiment, the secondary composite particles may have a D50, measured by DLS, that is at least 2 times, at least 5 times, at least 10 times, or at least 20 times the size of a primary particle measured by TEM.

An important dimension of the individual secondary composite particles is their radius, which is an indicator of the maximum distance lithium will have to diffuse in the silicon. The radius of individual particles may be measured directly from SEM or TEM pictures. If one for simplicity assumes that all the composite particles are spherical there is also a one-to-one relationship between the surface area per gram measured in a BET measurement (Brunauer-Emmett-Teller measurement) and the radius of the average particle. The average radius measured with BET in this way has shown to be in good agreement with the visual estimates from microscopy. The BET surface area per gram is also in itself directly correlated with the maximum distance that lithium will have to diffuse. The maximum lithium diffusion distance again affects both the gradients that can be expected, and the amount of lithium that will pass over any given part of the surface. These parameters will again impact practical parameters like charging time for an electric vehicle and degradation rate for the battery. Secondary composite particles having a diameter of 200 nm or less (measured by SEM) have been found out to be less likely to form cracks during the early cycles.

The secondary composite particles may be used directly in an anode. In a preferred embodiment, the secondary composite particles may further comprise an outer coating for protection against oxidation in air or reaction with the electrolyte and may be used directly in an anode. They will, however, still have some limitations. For particles below 1 micron one will be limited in how thick the electrode can be before ion transport in the electrolyte becomes a bottleneck. Due to their high silicon content the secondary composite particles will also expand and shrink in each cycle thereby leading to continuous new formation of SEI. In one embodiment, the coating applied to the secondary particles is made by exposing the secondary particles to a carbon containing gas and heating to a coating temperature where said gas reacts with the secondary particles. In one embodiment, the coating temperature may is from 30 °C to more than 1000 °C, preferably from 300 °C to 800 °C, and most preferably from 600 °C to 800 °C.

The reaction kinetics in the gas reactions forming the particles from the precursor gases may vary significantly depending on which gases are applied as the first and/or the second precursor gas, and the reaction temperature at which the particles are formed such that the atomic ratio C : Si in the precursor gases may deviate significantly from the average atomic ratio C : Si in the produced particles. Thus, the term "the relative amounts of the first and the second precursor gases are adapted such that the formed particles obtain an atomic ratio C : Si in the range of' as used herein means that the relative amounts of the first and the second precursor gas being mixed and homogenised is adjusted such that the resulting particles obtain the intended atomic ratio when the precursor gas mixture is heated to the intended reaction temperature and reacts to form the particles.

The C:Si ratio of an entire particle (or powder) can be measured using 'total carbon' measurement. The local variation can be estimated using TEM/EELS (electron energy loss spectroscopy), or XRD (X-ray diffraction) on crystallized samples.

The adaption of the relative amounts of the first and the second precursor gas to form the intended particles falls within the ordinary skills of the person skilled in the art. For example, the adaption of the relative amounts of the precursor gases for a given first and second precursor gas and intended reaction temperature may be obtained prior to a production stage by simply performing trial and error tests to determine the relative amounts to be applied with this gas mixture and reaction temperature.

X-ray diffraction (XRD) (when XRD is applied on particulate material it may also be denoted as powder X-ray diffraction (PXD) in the literature) give different diffraction patterns for crystalline and amorphous materials, respectively. Crystalline materials, due to their high degree of ordering and symmetry in their atomic structure, tend to give sharp peaks, Bragg peaks, in XRD-measurements. For crystalline silicon materials, the XRD-analysis typically gives sharp peaks at 28.4°, 47.4°, and at 56.1° in the measured diffraction patterns. In comparison, amorphous materials which lack the long-range order characteristic of crystalline molecular structures, typically gives broader peaks being significantly more "smeared-out" in the measured diffraction patterns. Amorphous silicon typically gives rounded peaks at 28° and 52°. These rounded peaks can be fitted with a Gaussian fit to reduce noise, and to get a well-defined value for the maximum and the width of the peak. Such a fit can be performed by any skilled XRD operator.

Also, the "sharpness" of a peak may be applied to distinguish between crystalline and amorphous materials. The typical Full width at half maximum (FWHM) of an XRD-peak for crystalline silicon is less than 2°, while the FHWM for amorphous silicon is typically larger than 4° when measured with a diffractometer applying unmonochromated CuKa radiation, and using a Gaussian fit to reduce measurement noise. Full width at half maximum (FWHM) is the width of the peak curve measured between those points on the *y*-axis which are half the maximum amplitude of the peak curve (after subtracting the background signal and/or signal from the sample holder). Samples containing both amorphous and crystalline silicon will obtain a diffraction pattern in XRD-analysis showing both sharp Bragg-peaks typical of the crystalline phase and the broader, more Gaussian peaks typical for the amorphous phase. The diffraction pattern may be applied to estimate the crystalline fraction of the sample from the ratio of area under the Bragg peak(s) above an amorphous broad peak and the total area of the broad peak and the Bragg peaks. A linear background should be subtracted from the calculation prior to the calculations.

Furthermore, the width of the Bragg peaks can be used to determine crystallite size using Rietveld refinement. When the crystallites are smaller than the X-ray wavelength, there will be a predictable peak broadening. A skilled operator can use this to estimate a typical crystallite size, assuming single-modal or multimodal distributions.

The angles and angle tolerances in the XRD analysis as applied herein refer to use of a diffractometer applying unmonochromated CuKa radiation since the radiation has high intensity and a wavelength of 1.5406 Å which corresponds well with the interatomic distances in crystalline solids making the analysis sensitive to presence of crystalline phases in the silicon particles. XRD analysis applying diffractometers with CuKa radiation is for the same reason the natural choice and thus the most widely used method in XRD analysis and is well known and mastered by the skilled person. Other diffractometers applying radiation with other wavelengths which may give different angles and angle tolerances. However, the skilled person will know how to convert these values from one radiation source to another.

Amorphous materials, see e.g. ref. [4], have some internal structure providing a short-range order at the atomic length scale due to the nature of the chemical bonding. This internal structure may be considered consisting of interconnected structural blocks. These blocks may or may not be similar to the basic structural units found in the corresponding crystalline phase, i.e. may or may not be providing the material with very small crystalline-resembling domains. Furthermore, for very small crystals, relaxation of the surface and interfacial effects distorts the atomic positions decreasing the structural order. Even the most advanced structural characterization techniques such as x-ray diffraction and transmission electron microscopy have difficulty in distinguishing between amorphous and crystalline structures on these length scales.

Thus, since it is difficult to determine by structural characterization techniques whether the silicon material of the particles made in the first step of the manufacturing method are completely amorphous or contain small crystalline domains at the atomic length scale, the term "predominantly amorphous" as used herein, encompasses silicon materials having a 100 % amorphous molecular structure to silicon materials containing very small crystalline domains (practically undetectable by XRD-analysis) at the atomic length scale. It is also reasonable to believe that the benefits of the amorphous materials in the anode (i.e. less directional stress and faster charging) is maintained even when the material also contains very small crystallites, typically less than 1 nm, so that atoms with nearest neighbour distances distorted by grain boundaries make up a similar mass fraction as the atoms where all nearest neighbours are in crystalline order.

The term "first precursor gas of a silicon containing compound" as used herein means any silicon containing chemical compound being in the gaseous state and which reacts to form Si-particles at the intended reaction temperatures. Examples of suited first precursor gases include, but are not limited to, silane (SiH₄), disilane (Si₂H₆), and trichlorosilane (HCl₃Si), or a mixture thereof.

Likewise, the term "second precursor gas of a carbon containing compound, " as used herein means any chemical compound containing carbon that causes C-atoms to be incorporated into the matrix surrounding the Si-particles being formed when heated to the intended reaction temperatures. Examples of suited second precursor gases of a carbon containing compound include, but are not limited to alkanes, alkenes, alkynes, aromatic compounds, and mixtures thereof. In example embodiments, the second precursor gas of a carbon containing compound may be is at least an organosilane or a hydrocarbon, preferably methane (CH₄), ethane (C₂H₆), propane (C₃H₈), ethene (C₂H₄), ethyne (C₂H₂), cyclohexane, cyclohexene, toluene, benzene or mixtures thereof.

Especially preferred example embodiments of precursor gas, i.e. the homogeneous gas mixture of a gaseous silicon and hydrogen compound and a gaseous substitution element C and hydrogen compound, are either silane (SiH₄) or disilane (Si₂H₆) mixed with a hydrocarbon gas chosen from one of; methane (CH₄), ethane (C₂H₆), propane (C₃H₈), ethene (C₂H₄), ethyne (C₂H₂), cyclohexane, cyclohexene, toluene, benzene and mixtures thereof. The partial use of larger and stable ring structures are likely to be preferable as this will likely enhance the ratio of C-C to Si-C bonds in the first matrix.

The production yield in gas phase reaction processes, defined as the ratio of the mass of produced particles over the mass of precursor gas being fed to the reactor, is shown to be dependent on process parameters such as the concentration of the precursor gases in the reaction zone, the reaction temperature, and/or the residence time of the precursor gases in the reaction zone. In general, the higher reaction temperature, the higher dissociation degree of the precursor gases and thus higher production yields. Thus, since the predominantly amorphous silicon-containing primary particles are observed to maintain their predominantly amorphous structure at significantly higher reaction temperatures, roughly around 50 °C higher, than which amorphous (pure) silicon particles are observed to transform to crystalline silicon, the method according to first aspect of the invention has the advantage of a significantly improved production yield as compared to production of (pure) silicon particles without compromising on the favourable amorphous structure. Raising the reaction temperature of the homogenous mixture of the first and second precursor gas from 750 °C to 800 °C may give up to 20 percentage points increase in the production yield. This feature gives the method according to the invention a significant economic advantage since silicon hydride gases such as silane, disilane etc. are comparatively expensive.

Thus, in an example embodiment of the manufacturing method according to the first aspect of the invention, after injecting the homogeneous gas mixture into a reactor space, the temperature of the homogeneous gas mixture may be raised to a reaction temperature being from 600 to 1100 °C, preferably from 700 to 900 °C.

A further advantage of the relatively high reaction temperature is that the reactions of the precursor gases become better driven towards complete reaction and furthermore, more effectively drives off hydrogen from the newly formed nuclides and nano particles phase. This is advantageous since hydrogen in the active material of the anode may potentially cause irreversible loss of capacity of the electrochemical cell by irreversible formation of lithium hydride.

The size of particles made by nucleation and growth in gas phase is dependent on the precursor gas concentration in the condensation zone. In general, the higher the precursor gas concentration, the larger particles are formed. To enable making smaller particles, the precursor gases may be diluted in an inert gas such as e.g. hydrogen, preferably argon or nitrogen gas. Any inert gas, i.e. a gas which will not react chemically with the precursor gases or silicon particles may be used for dilution purposes.

In an example embodiment of the invention, the secondary composite particles may have a BET surface area of from 10 to 250 m²/g, from 15 to 170 m²/g, from 25 to 130 m²/g, from 35 to 130 m²/g or from 10 to 50 m²/g. If we, for simplicity, assume that these particles all have the same size (here the diameter) and are spherical or quasi-spherical and non-porous, these BET surface areas correspond to (approximate estimates) an average particle diameter in the range of from 10 nm to 200 nm, from 15 nm to 150 nm, from 20 nm to 100 nm, or from 20 nm to 70 nm. The BET determination of the particle surface area is well known to the person skilled in the art. An example of a standard which may be applied to determine the BET surface area of the particles is ISO 9277:2010.

In an embodiment the secondary composite particles may have an average particle diameter in the range of from 20 nm to 1 µm, from 20 nm to 500 nm, from 50 nm to 100 nm, from 200 nm to 1 µm, or from 500 nm to 1 µm.In a second aspect, the invention relates to the formation of tertiary particles.

A plurality of secondary composite particles described in the first aspect of the invention, may be agglomerated into tertiary composite particles, where a plurality of secondary composite particles is covalently bonded into a network that is ensuring mechanical cohesion, electron transport, and ion transport.

Here the adjectives "primary", "secondary" and "tertiary", when referring to particles, refer to the level in the assembly of the particles, and not to any number of elements composing the particle. A primary particle is a particle that may later be embedded in a secondary particle but does not contain any particle other than itself. A secondary particle is a particle comprising at least a primary particle. A tertiary particle is a particle comprising at least a secondary particle.

The external surfaces are then also partially and/or fully covered by a second matrix (or outer layer, or bonding network layer), thus reducing the external surface area available to the electrolyte. This second matrix is a conductive, adhesive, lithium-conducting matrix.

During cell operation, a solid electrolyte interphase (SEI) layer will be formed on all anode material surfaces available to the liquid electrolyte. This layer is well known to contain Lithium and if the surface area is large, this SEI formation will consume a lot of Lithium from the cathode. There are multiple sources for Li losses in the anode, but the Lithium lost in the SEI layer will as a minimum be proportional to the total surface area.

The secondary matrix of the tertiary composite particles may be obtained through many different methods such as spray drying, baking followed by milling, emulsion or microfluidics.

A carbonized polymer is one choice for this second matrix, and this can be formed in many ways. Multi-component second matrices are also possible.

In one embodiment, the manufacturing of tertiary composite particle is obtained by spray drying a solution of secondary particles, a suitable spraying solvent, and a carbon precursor. After spray drying, the tertiary particles can then be cross-linked, pyrolyzed or carbonized.

Possible combinations that have successfully been tried is given in the table below:

| **Solvent** | **Carbon source** | |
|---|---|---|
| Dimethylformamide | Polyacrylonitrile (PAN) | |
| Methanol, ethanol or water | Phenolic Resin, Melamine Formaldehyde resin, or Resorcinol formaldehyde resin | |
| Toluene | Pitch or Bitumen powder | |
| Water | Sugar, CMC (carboxymethyl cellulose), aminosugars | |
| Methyl Ethyl Ketone (MEK) | Various rubbers | |

Another method is to pyrolyze a slurry of a similar composition into a porous slab, for example by heating the slurry to 600 - 1100 °C under inert conditions, and then mill it down to suitable particle sizes, i.e. of a large enough size that the final BET area is acceptable, and small enough that is easy to handle when casting electrodes and that it has sufficient internal Li-conductivity to allow the desired charging rates. An example of suitable average diameter for the tertiary composite particles may be 1 to 10µm. A pitch based slurry may have to be heated to obtain a suitable viscosity to give sufficient mixing and wetting.

The spray drying has benefits in terms of more homogeneous size distribution, higher silicon material yields and spherical shapes that are less likely to result in clogging of electrode casting equipment, while the milling route may have a cost advantage. This cost advantage may potentially disappear if the under-sized particles need to be sorted away thereby giving lower silicon material yields. Finally, by making an emulsion of different solvents, or microfluidic methods, it is also possible to form spheres. These methods are known to the person skilled in the art.

In an embodiment, the tertiary composite particles are manufactured by:
- manufacturing secondary composite particles using the method according to the first aspect of the invention, and
- embedding the secondary composite particles in a second matrix predominantly made of carbon, and comminute the second matrix into particles.

In an embodiment, the tertiary composite particles are manufactured by:
- manufacturing secondary composite particles using the method according to the first aspect of the invention, and
- dispersing the secondary composite particles in a slurry comprising components predominantly made of carbon, and
- coating graphite particles with the slurry comprising the secondary composite particles, and
- heat treating the coated graphite particles at a temperature of 700 to 1000 °C.

The resulting tertiary composite particles may preferably be porous. The porosity of the particle can be evaluated by FIB-SEM (Focused Ion Beam - Scanning Electron Microscopy), for example by drawing a series of diameters (for example three) on the picture of the particle and determining the ratio of the solid versus opening fraction along these segments.

In an embodiment, the tertiary composite particles may have a porosity between 15% and 60%, preferably between 25% and 50%.

The resulting tertiary composite particles has an increased size compared to the secondary composite particles, which makes the tertiary composite particles easier to handle in electrode processing (smaller particles spread more easily, increasing the risk for loss during processing and health risk for workers).

The method may comprise an optional additional step of depositing layer of conductive surface coating onto the surface of the tertiary composite particles, this can be called the skin-coating step. The skin-coating limits the access of the electrolyte to the interior pores and surfaces of the particles, preferably, the skin coating does not change fundamentally the particle size. As a consequence this skin coating reduces the total surface area further (as can be measured by BET), and thereby also reduces the interface between the liquid electrolyte and the anode surface, thereby also reduces the amount of SEI formation during the start-up of the battery cell, which again reduces the expensive Lithium losses in the first cycles. This skin coating step also further reduces the direct contact between the liquid electrolyte and the silicon itself, thereby also reducing the probability of HF etching and SiOₓ formation. The coating may preferably be <10% of the total particle weight.

An outer surface coating on the tertiary composites may be achieved by a second spray drying, where additional polymers from the slurry would be left to dry on the outside of the particle. The outer surface coating may also be grown by using a thin slurry with a formaldehyde resin and cross linking while the particles are suspended in the slurry. Other coating methods are also described in literature.

Before and/or after the surface coating, the carbon may be heat treated to obtain good transport and adhesion properties. One can opt for:
- Crosslinking/cyclization only, most of the hydrogen remains in the carbon, lower cost process, more elastic carbon phase (~300 °C),
- Low temperature carbonization (leaving amorphous silicon, allowing faster first cycle charging) (600-800 °C),
- Medium temperature carbonization (better carbon conductivity, better CE, but crystallizing the Si) (800-1000 °C), or
- High temperature carbonization (high carbon diffusion, risk of forming excess SiC at Si-C interfaces, but possibly even better carbon quality) (>1000 °C).

In one embodiment the surface coating may be predominantly made of carbon.

In one embodiment the surface coating of the tertiary particles may have a thickness between 1 and 500 nm, 5 and 250 nm, 7 and 100 nm or preferably 10 and 50 nm, to enhance the surface properties, lower fire-risk and promote formation of a stable solid-electrolyte-interface (SEI). The invention is not tied to any particular coating material or method of coating the particles but may apply any coating and coating method known to the skilled person for coating silicon particles.

The relatively high heat tolerance of the predominantly amorphous silicon-containing particles of the invention is advantageous in that the particles will better tolerate the temperatures associated with formation of carbon coatings - and/or the formation of composite particles comprising the silicon nano particles - by pyrolysis without showing any significant transformation to the crystalline state. The carbon-enclosed or carbon-coated predominantly amorphous silicon-containing particles of the invention may maintain their predominantly amorphous structure even through a pyrolysis process. The quality of the pyrolysis will often depend on temperature, and it may be preferable to go to 600 °C, 700 °C or preferably 800 °C or even 900°C to get a high-quality carbon material coating or carbon enclosure.

### Particles

The third aspect of the invention relates to secondary composite particle, each secondary particle comprising a plurality of primary particles embedded in a first matrix, wherein the primary particles are predominantly composed of silicon, and wherein the first matrix comprises silicon and carbon.

These secondary composite particles may be used as the active material in the negative electrode in a secondary lithium-ion electrochemical cell.

In one embodiment, the first matrix of the secondary composite particles is non-porous.

In an embodiment, the secondary composite particle may further comprise an outer coating. The outer coating may for example be intended to enhance stability against oxidation, to provide good strong chemical bonding between matrix and particle, or to improve dispersion properties. The outer coating material may comprise carbon, organic molecules, oxides like LiₓSi_{y}O, TiₓO, AlₓO, or any combination thereof. The coating may be applied using wet chemical methods, CVD, ALD or other techniques.

The fourth aspect of the invention relates to a tertiary composite particle. These tertiary composite particles each comprise a plurality of secondary composite particles (as described in the third aspect of the invention) embedded in a second matrix, the second matrix being predominantly made of carbon, wherein each secondary particle comprises a plurality of primary particles embedded in a first matrix, wherein the primary particles are predominantly composed of silicon, and wherein the first matrix comprises silicon and carbon.

In one embodiment, the tertiary composite particle comprises a graphite particle being coated with a second matrix predominantly made of carbon and which contains embedded therein a plurality of secondary composite particles according to the third aspect of the invention, and wherein the second matrix is graphitized by being heated to a temperature of 700 to 1000 °C. I.e., this example embodiment of the tertiary composite particle comprises a graphite particle being coated with a graphitized carbonaceous second matrix containing a plurality of secondary composite particles according to the third aspect of the invention.

In one embodiment, the tertiary composite particle according to the fourth aspect of the invention may further comprise a second outer coating laid onto the outer surface of the second matrix. Examples of preferred outer coating materials include carbon, organic molecules, oxides like LiₓSi_{y}O, TiₓO, AlₓO, or any combination thereof.

The term "predominantly composed of silicon" as used herein, encompasses phases comprising at least 50 % silicon by weight. In another embodiment the primary particles may comprise at least 80 %, at least 90 %, at least 95 %, at least 96 %, at least 97 %, at least 98 %, at least 99 %, at least 99,5 %, or consisting of 100% silicon.

In an embodiment, the total atomic ratio of silicon to carbon in the secondary composite particle may be in the range of [0.2, 7], [0.5, 5] or [1, 4].

In an embodiment, the primary particles may be predominantly amorphous.

In an embodiment, the primary particles may be predominantly crystalline.

In an embodiment, the primary particles may be a mixture of amorphous and crystalline.

In an embodiment the tertiary composite particle may have an average diameter (weight average, measured on SEM pictures) between 1 and 40 µm, between 2 and 20 µm, or between 2 and 10 µm.

The complex structure of the secondary and tertiary composite particles of the invention makes them well suited for use as the active material in the negative electrode of secondary lithium-ion electrochemical cells (batteries).

According to a fifth aspect the invention relates to a negative electrode for a secondary lithium-ion electrochemical cell, comprising:
- at least one particulate active material,
- a particulate conductive filler material,
- binder material, and
- a current collecting substrate,
   wherein the at least one particulate active material is embedded in the binder material to form an anode mass which is deposited as an anode mass layer onto the current collecting substrate, and
- one of the at least one particulate active material is a secondary composite particle according to the third aspect of the invention.

According to a sixth aspect the invention relates to a negative electrode for a secondary lithium-ion electrochemical cell, comprising:
- at least one particulate active material,
- a particulate conductive filler material,
- binder material, and
- a current collecting substrate,
   wherein the at least one particulate active material is embedded in the binder material to form an anode mass which is deposited as an anode mass layer onto the current collecting substrate, and
- one of the at least one particulate active material is a tertiary composite particle according to the fourth aspect of the invention.

According to a seventh aspect the invention relates to a negative electrode for a secondary lithium-ion electrochemical cell, comprising:
- at least one particulate active material,
- a particulate conductive filler material,
- binder material, and
- a current collecting substrate,
   wherein
- the at least one particulate active material is embedded in the binder material to form an anode mass which is deposited as an anode mass layer onto the current collecting substrate,
   characterised in that
- one of the at least one particulate active material is a tertiary composite particle,
and wherein:
- the tertiary composite particle comprises a graphite core particle covered by a coating of a plurality of secondary composite particles embedded in a second matrix, the second matrix being predominantly made of carbon,
- each secondary particle comprises a plurality of primary particles embedded in a first matrix,
- the primary particles are predominantly composed of silicon, and
- the first matrix comprises silicon and carbon.

A beneficial property of the particles according to the third and fourth aspect of the invention is that lower contents of the substitution element C normally will imply higher charging capacity for the material as none of the substitution elements, C, are known to host as much lithium as silicon is.

A further beneficial property is that the co-diffusion of silicon during lithiation and delithiation is reduced, giving more stable particle geometries. A further beneficial property of the substitution element C is that the reduced expansion also reduces cracking of the intermediate particles, thereby preventing loss of contact.

A further benefit is that the porous structure of the tertiary particle allows the expansion of individual primary and intermediate particles to happen without leading to significant expansion of the electrode.

The term "active material" as used herein, refers in general to the chemical compounds/material of the electrodes (anode and cathode) which take and give the lithium-ions and electrons to generate or store energy, i.e. the material which undergoes lithiation and delithiation in the charge/discharge-cycling of the electrochemical cell.

In secondary electrochemical cells, the chemical half-cell reactions at the electrodes switch from oxidation to reduction reactions with the charge and discharge state of the charge/discharge cycle, respectively. As used herein, the term "negative electrode" is applied to denote the electrode of the electrochemical cell at which the oxidation side of the chemical reaction(s) takes place during discharge, i.e. the negative electrode is the electron producing electrode when drawing power out of the electrochemical cell. The negative electrode may also be denoted as the anode in the literature. The terms anode and negative electrode may be used interchangeably herein.

The negative electrode according to a fifth aspect of the invention may apply any conductive substrate known or conceivable to the skilled person being suited for use as the current collector in the negative electrode of secondary lithium-ion electrochemical cells. Examples of suited conductive substrates include but is not limited to; foils/sheets of graphite, aluminium or copper.

The negative electrode according to the third aspect of the invention may apply any binder material known or conceivable to the skilled person being suited for use a binder in the negative electrode of secondary lithium-ion electrochemical cells. Examples of suited binders include but is not limited to; styrene butadiene copolymer (SBR), carboxymethylcellulose (CMC), ethylene-propylene-diene methylene (EPDM), and polyacrylic acid (PAA).

In an example embodiment, the anode mass may further comprise a particulate conductive filler material mixed with and embedded together with the particulate active material in the binder material. The negative electrode comprising the tertiary composite particles of the invention may apply any conductive filler material known or conceivable to the skilled person being suited for use a conductive filler of the anode mass for the negative electrode of secondary lithium-ion electrochemical cells. Examples of suited particulate conductive filler materials include but is not limited to; carbon allotropes such as graphene, reduced graphene oxide, an elastic polymer, a predominantly carbon containing material made by pyrolysis of a carbon rich material, carbon black, carbon nanotubes, or mixtures thereof.

In an embodiment of the negative electrode according to fifth or sixth aspect of the invention, the conductive substrate may be a foil or a sheet of either graphite, Cu or Al.

In an embodiment of the negative electrode according to fifth or sixth aspect of the invention, the binder may either be a styrene butadiene copolymer, a carboxymethylcellulose, an ethylene-propylene-diene methylene (EPDM), a polyacrylic acid (PAA).

In an embodiment of the negative electrode according to fifth or sixth aspect of the invention, the anode mass may further comprise a particulate conductive additive material mixed with and embedded together with the particulate active material in the binder material.

In an embodiment of the negative electrode according to fifth or sixth aspect of the invention, the particulate conductive filler material may be a carbon black, carbon nanotubes, graphene, or a mixture thereof.

### LIST OF FIGURES

Figure 1 is a diagram showing an XRD analysis of 1,7 nm silicon nano particles embedded in a carbon-rich matrix (sample 10-A or 11-2) after heat treatment for 30 min at 900 °C. The composite material has an average atomic content of 35% C and 65% Silicon.
Figure 2 is a diagram showing an XRD analysis of 3,4 nm silicon nano particles embedded in a carbon-rich matrix (sample R10B) after heat treatment for 30 min at 900 °C using a single-modal distribution of crystallite sizes. The composite material has an average atomic content of 16% C and 84% Silicon.

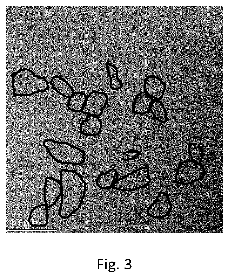

Figure 3 is a TEM picture showing crystalline silicon nanodomains in secondary composite particles (sample R10A) after heat treatment for 30 min at 900 °C
Figure 4 is a series of TEM pictures showing secondary composite particles.
Figure 5 is a TEM pictures showing pure silicon nano particles of similar external size as in Figure 4 that did not undergo any heat treatment.
Figure 6 is a SEM picture of showing tertiary composite particles.
Figure 7 is a SEM picture of showing tertiary composite particles having a conductive coating.
Figure 8 is a SEM picture showing a cross-section of tertiary composite particles.

### VERIFICATION OF THE INVENTION

The invention will be described in further detail by way of example embodiments.

### Comparison example

A samples of (pure) silicon particles were made by pre-heating a homogenous gas mixture of 33% silane diluted in hydrogen gas to about 400 °C and introducing the gas into a decomposition reactor and mixing the silane gas with preheated hydrogen gas having a temperature of 710 °C. The residence time in the reactor was less than 0.5seconds. The resulting silicon particles were rapidly cooled to below 300 C and collected by filtration.

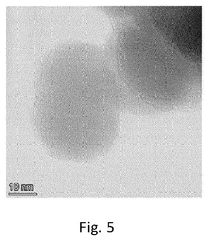

The sample particles were then analysed by TEM and are illustrated in fig. 5. The analysis reveals 40 nm pure silicon nano particles. There are no visible subdomains inside.

### Example 1: Secondary composite particles: Sample 10-A and 11-2

An example embodiment of the secondary composite particles according to the invention may be prepared as follows:
A homogeneous mixture of silane gas and ethene in a molar ratio of 1 : 1 was preheated to about 400 °C and thereafter introduced into a reactor chamber. There the homogeneous mixture of silane gas and ethene was further mixed with about 10 times more of an inert gas (nitrogen) which was preheated to a temperature giving a temperature in the resulting gas mixture of 810 °C. Using MS, the consumption of the different gases was calculated, estimating the composition. The composition was qualitatively confirmed using EDS, but the precision of this measurement was not sufficient. The quantities available were not suited for 'total carbon' measurement. The resulting secondary composite particles, however, had an approximate atomic ratio of C : Si of 0.35 : 0.65, i.e. the secondary composite particles consisted of predominantly amorphous Si nano particles in an amorphous matrix of Carbon and Silicon, thereafter called sample 10-A.

The same process was repeated and yielded secondary composite particles consisting of predominantly amorphous Si nano particles in an amorphous matrix of carbon and silicon, and thereafter called sample 11-2.

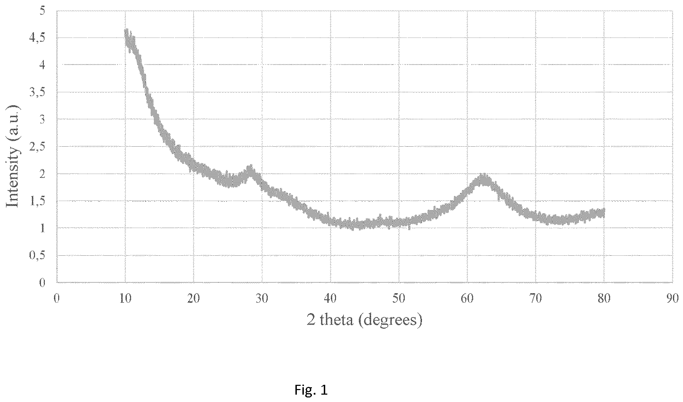

The residence time in the reactor was less than 0.5 seconds. The exhaust gas and particles exiting the reactor space were thereafter rapidly cooled and collected in a filter. The particles were heat treated for 30min at 900 °C, and then analysed by XRD to investigate their atomic structure. The result is shown in Figure 1..

The XRD signal from the secondary particles is very narrow, but there is one relatively clear, wide Bragg peak. At Rietveld refinement, a crystallite size (diameter) of 1.7 nm is found for the nanoparticles inside. There are no signs of other crystalline phases.

### Example 2: Secondary composite particles: Sample R10B

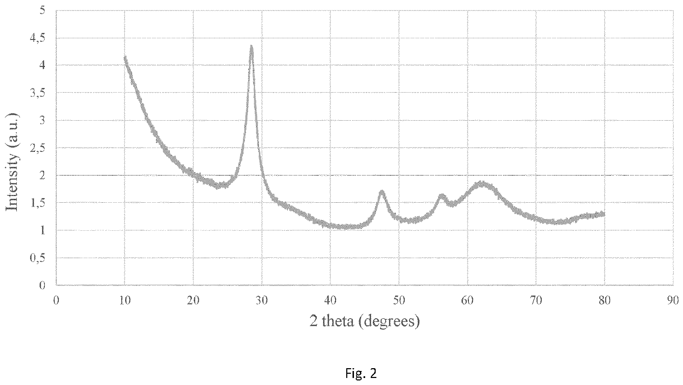

Another embodiment of particles were made in the similar way as in example 1, except that the gas mixture had now 50 % more silane than ethene and was heated to 800 °C in the reactor for material R10B in order to make a composite with approximately 84 atomic% silicon and 16 atomic % carbon, and where the majority of the silicon is located in silicon dominant nano particles which again are embedded in an amorphous matrix of carbon and silicon. The particles were heat treated for 30 min at 900 °C, and then analysed by XRD and the result is shown in figure 2. In figure 2, the XRD signal from the secondary particle with an estimated 16 atom% C total (R10B) gives a better signal (both due to a little more sample and larger crystallites) and has clear Si crystalline reflections, no reflections from other phases. When fitting with a single Si phase, a crystallite size of 3.45 nm is obtained and a reasonably good fitting. When fitting a bimodal distribution of the crystallite sizes, an even better fit is obtained, especially of the first reflection (111). This corresponds to approx. 3 wt% of a Si nanodomain with larger size of 14nm and 97 wt% of Si domains around 3.4 nm.

### Example 3 - Tertiary particles

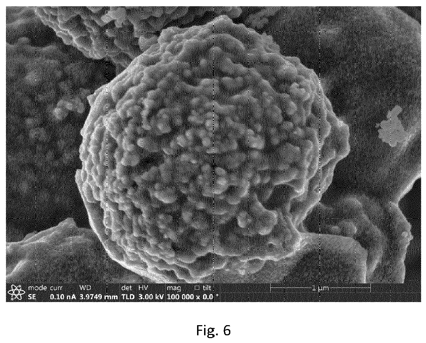

The tertiary particle shown in figure 6 was obtained by forming a slurry of secondary particles, Phenolic Resin and methanol solvent in the ratio 2:1:60, and spray drying it in a Buchi B-290 spray dryer at 170C, with a pump speed of 40, aspirator 100, nozzle gas flow 55.

Fig. 6 is a SEM picture of tertiary composite particles of about 3 µm. The secondary composite particles are still visible, even though there is clearly a carbon coating fully covering the secondary particles.

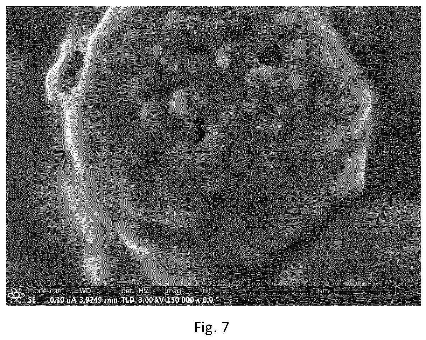

The skin coated tertiary composite particles shown in fig. 7 were obtained by taking the tertiary particles shown in fig. 6, heat treating them under vacuum at 200 °C for 1h for crosslinking, then form a slurry of these heat treated tertiary particles, Phenolic Resin and methanol solvent in the ratio 4:1:60, and spray drying it in a Buchi B-290 spray dryer at 170C, with a pump speed of 40, aspirator 100, nozzle gas flow 55. This resulted in the formation of an additional coating (skin-coating) which further protects the tertiary composite particles.

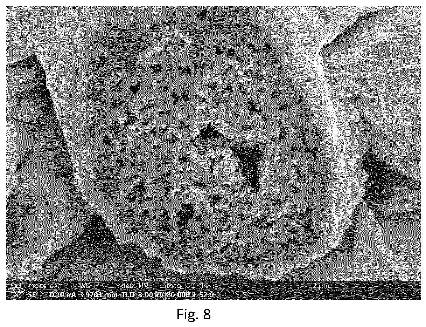

The tertiary particle shown in fig 8 was obtained by forming a mixture of secondary particles, Polyacrylonitrile polymer and Dimethylformamide solvent in the ratio 2:1:40, and spray drying it in a Buchi B-290 spray dryer at 220C, with a pump speed of 15, aspirator 100, nozzle gas flow 55.

Fig. 8 is a cross-section of tertiary composite particles. The secondary composite particles are also still visible here, both at the surface and inside the tertiary particle. The porosity is also visible, and there is a clear outer 'skin' protecting the inner porosity.

### Sample comparison

Various secondary composite particles were prepared with different atomic contents of Silicon and Carbon. These secondary composite particles were then used as a part of a negative electrode for a secondary lithium-ion electrochemical cell, together with a particulate conductive filler material, binder material, and a current collecting substrate. The negative electrode was assembled in a lithium-ion electrochemical cell. The capacity and number of cycles until 20% loss of capacity were measured. The results are presented in table 1.

**Table 1: Cycling results of various lithium-ion electrochemical cell comprising various secondary composite particles.**

| Secondary composite particle composition | | Silicon sub-domain size | Capacity mAh/g | # cycles until 20% lost capacity | % capacity maintained at 2C |
|---|---|---|---|---|---|
| Silicon | Carbon | | | | |
| 100% | 0% | 40 nm | 3100 | <300 | <10% |
| 86% | 14% | 4 nm | 2200 | 36 | 9% |
| 78% | 22% | Sample lost | 2100 | 95 | 24% |
| 71% | 29% | 3,5 nm | 1500 | **310** | 33% |
| 65% | 35% | 1,7 nm | 1000 | **621** | 30% |
| 0% | Graphite | N/A | 360 | >2000 | Data missing |

Various tertiary composite particles were prepared based on the secondary composite particles described in Table 1. These tertiary composite particles were then used as a part of a negative electrode for a secondary lithium-ion electrochemical cell, together with a particulate conductive filler material, binder material, and a current collecting substrate. The negative electrode was assembled in a lithium-ion electrochemical cell. The capacity and number of cycles until 20% loss of capacity were measured. The results are presented in table 2.

**Table 2: Cycling results of various lithium-ion electrochemical cell comprising various tertiary composite particles, prepared from secondary composite particles which composition is described here.**

| Secondary composite particle composition | | Silicon sub-domain size | Capacity mAh/g | # cycles until 20% lost capacity | % Capacity maintained at 2C |
|---|---|---|---|---|---|
| Silicon | Carbon | | | | |
| 100% | 0% | 40 nm | 2400 | 100 | 38% |
| 86% | 14% | 4 nm | 2000 | 197 | 30% |
| 78% | 22% | Sample lost | 1500 | 256 | 26% |
| 71% | 29% | 3,5 nm | 1400 | **323** | 36% |
| 65% | 35% | 1,7 nm | 800 | **691** | 38% |
| 0% | Graphite | N/A | 360 | 2000 | Data missing |

Here, the skilled person will understand that 1C means that the charging/- discharging rate is set so that the battery is fully charged in one hour. 2C means twice as fast, so full charging/discharging in half an hour. High % capacity maintained at 2C are advantageous.

As can be seen, the number of cycles before 20% capacity is lost has increased from the normal 30 for regular pure silicon to around 300 for the material with 1500 mAh/g and to 691 for the material with 800 mAh/g. These are improvements by factor 10 - 20 and brings the materials immediately into the range relevant for commercial use - even without an outer coating to extend cycle life further.

The tertiary particles in table 2 have the further benefit (compared to secondary particles) that due to their much larger size, they allow easier transport of electrolyte between the particles, and they can therefore be used in a thicker electrode with more commercially relevant thickness/loading than what was used for the secondary particles in Table 1.

### References

1 Qi et al. (2017), "Nanostructured anode materials for lithium-ion batteries: principle, recent progress and future perspectives", J. Mater. Chem. A, vol. 5, pp. 19521-19540
2 Sourice et al. (2016), "Core-shell amorphous silicon-carbon nanoparticles for high performance anodes in lithium-ion batteries", Journal of Power Sources, vol. 328, pp. 527-535.
3 Sourice et al. (2015), "One-Step Synthesis of Si@C Nanoparticles by Laser Pyrolysis: High Capacity Anode Material for Lithium-Ion Batteries", ACS Appl. Mater. Interfaces, vol. 7, pp. 6637-6644, DOI: 10.1021/am5089742
4 https://en.wikipedia.org/wiki/Amorphous_solid
5 Berla, Lucas A.; Lee, Seok Woo; Ryu, Ill; Cui, Yi; Nix, William D. (2014), "Robustness of amorphous silicon during the initial lithiation/delithiation cycle", Journal of Power Sources. 258: 253-259. Bibcode:2014JPS...258...253B. doi:10.1016/j.jpowsour.2014.02.032*.*
6 Sung, J., Kim, N., Ma, J. et al. (2021) Subnano-sized silicon anode via crystal growth inhibition mechanism and its application in a prototype battery pack. Nat Energy 6, 1164-1175. https://doi.org/10.1038/s41560-021-00945-z
7 Morten Wetjen et al (2018) "Morphological Changes of Silicon Nanoparticles and the Influence of Cutoff Potentials in Silicon-Graphite Electrodes" Journal of The Electrochemical Society, 165 (7) A1503-A1514
8 Reciprocal Relations in Irreversible Processes. I. Lars Onsager Phys. Rev. 37, 405 (1931)
9 Reciprocal Relations in Irreversible Processes. II. Lars Onsager Phys. Rev. 38, 2265 (1931)

## Claims

1. A method for manufacturing a secondary composite particle, wherein the secondary particle comprises a plurality of primary particles embedded in a first matrix, wherein the primary particles are predominantly composed of silicon, and wherein the first matrix comprises silicon and carbon,
**characterised in that** the method comprises the steps of:
- forming a homogeneous gas mixture comprising a first precursor gas of a silicon containing compound and a second precursor gas of a carbon containing compound, such that the atomic ratio between silicon and carbon in the homogeneous gas mixture is in the range of (0, 10],
- injecting the homogeneous gas mixture having a temperature below a reaction temperature into a reactor space, and then
- raising the temperature of the homogeneous gas mixture to the reaction temperature, wherein the reaction temperature is between 500 and 1200 °C, and
- cooling to a temperature below 500 °C and collecting the secondary composite particles.

2. The method for manufacturing a secondary composite particle according to claim 1, wherein the homogeneous gas mixture is preheated to a temperature below 500 °C, preferably below 450 °C, more preferably below 400 °C, more preferably below 350 °C, or most preferably below 300 °C before injecting the homogeneous gas mixture into the reactor space.

3. The method for manufacturing a secondary composite particle according to claim 1 or 2, wherein:
- the first precursor gas is one of: silane (SiH₄), disilane (Si₂H₆), trichlorosilane (HCl₃Si), an organosilane, or a mixture thereof, and
- the second precursor gas is one of an organosilane or a hydrocarbon, preferably methane (CH₄), ethane (C₂H₆), propane (C₃H₈), ethene (C₂H₄), ethyne (C₂H₂), cyclohexane, cyclohexene, toluene, benzene, or mixtures thereof.

4. The method for manufacturing a secondary composite particle according to any one of the preceding claims, wherein the reaction temperature is from 600 to 1100 °C, preferably from 700 to 900 °C.

5. The method for manufacturing a secondary composite particle according to any of the preceding claims, wherein the homogeneous gas mixture also comprises hydrogen, nitrogen, a noble gas like helium, neon, argon, or any other gas that will not chemically react with the precursor gases at the reaction temperature.

6. The method for manufacturing a secondary composite particle according to any of the preceding claims, wherein a carbon coating is applied to the secondary particles by exposing the secondary particles to a carbon containing gas and heating to a coating temperature where said gas reacts with the secondary particles, and wherein the coating temperature is from 30 °C to more than 1000 °C, preferably from 300 °C to 800 °C, and most preferably from 600 °C to 800 °C.

7. A method for manufacturing a tertiary composite particles comprising the steps of:
- manufacturing a plurality of secondary composite particles according to the method of any one of claims 1 to 6, and
- embedding the plurality of secondary composite particle in a second matrix predominantly made of carbon and then comminute the second matrix into particles.

8. A method for manufacturing tertiary composite particles comprising the steps of
- manufacturing a plurality of secondary composite particles according to the method of any one of claims 1 to 6,
- dispersing the secondary composite particles in a slurry comprising components predominantly made of carbon, and
- coating graphite particles with the slurry comprising the plurality of secondary composite particles, and
- heat treating the coated graphite particles at a temperature of 700 to 1000 °C.

9. The method for manufacturing tertiary composite particles according to claim 7, wherein the comminution of the second matrix into particles is obtained by spray-drying the second matrix followed by cross-linking, pyrolyzing and/or carbonizing the tertiary composite particles formed by the spray-drying.

10. The method for manufacturing tertiary composite particles according to any one of claims 7 to 9, further comprising the step of depositing layer of a conductive surface coating onto the surface of the tertiary composite particles, and wherein the conductive surface coating is predominantly made of carbon.

11. A secondary composite particle, wherein:
- the secondary particle comprises a plurality of primary particles embedded in a first matrix,
- the primary particles are predominantly composed of silicon, and
- the first matrix comprises silicon and carbon.

12. The secondary composite particle according to claim 11, further comprising an outer coating.

13. The secondary composite particle according to claim 11 or 12, wherein the total atomic ratio of silicon to carbon in the secondary composite particle is in the range of [0.2, 7], preferably [0.5, 5], or most preferably [1, 4].

14. The secondary composite particle according to any one of claims 11 to 13, wherein the secondary composite particles have an average diameter between 20 nm and 1 µm, and the primary particles have an average diameter of 5 nm or less, and wherein the primary particles comprise at least 90 % silicon by weight based on the weight of the primary particles.

15. The secondary composite particle according to any one of claims 11 to 13, wherein:
- the primary particles are amorphous, or
- the primary particles are crystalline, or
- a mixture of the above.

16. A tertiary composite particle, comprising a particulate second matrix predominantly made of carbon, further comprising a plurality of secondary composite particles according to any one of claims 11 to 15 embedded therein.

17. A tertiary composite particle, comprising a graphite particle coated with a graphitized second matrix predominantly made of carbon and which contains embedded therein a plurality of secondary composite particles according to any one of claims 11 to 15.

18. The tertiary composite particle according to claim 16 or 17, wherein the tertiary composite particle further comprises an outer conductive coating laid onto the outer surface of the second matrix, and wherein the conductive surface coating is predominantly made of carbon.

19. The tertiary composite particle according to any of claims 16 to 18, wherein the tertiary composite particle has an average diameter between 1 and 40 µm.

20. The tertiary composite particle according to any of claims 16 to 19, wherein the second matrix of the tertiary composite particle has a porosity between 15% and 60%, preferably between 25% and 50%.

21. A secondary composite particle obtainable by the method according to any one of claims 1 to 6.

22. A tertiary composite particle obtainable by the method according to any one of claims 7 to 10.

23. A negative electrode for a secondary lithium-ion electrochemical cell, comprising:
- at least one particulate active material,
- a particulate conductive filler material,
- binder material, and
- a current collecting substrate,
wherein
the at least one particulate active material is embedded in the binder material to form an anode mass which is deposited as an anode mass layer onto the current collecting substrate,
**characterized in that**
- one of the at least one particulate active material is a secondary composite particle according to any one of claims 12 to 16.

24. A negative electrode for a secondary lithium-ion electrochemical cell, comprising:
- at least one particulate active material,
- a particulate conductive filler material,
- binder material, and
- a current collecting substrate,
wherein
- the at least one particulate active material is embedded in the binder material to form an anode mass which is deposited as an anode mass layer onto the current collecting substrate,
**characterised in that**
- one of the at least one particulate active material is a tertiary composite particle according to any one of claims 17 to 19.
